# EUROPEAN PATENT SPECIFICATION

(11) **EP 3 740 990 B1**
(45) Date of publication and mention of the grant of the patent: **29.05.2024**
(21) Application number: 19703543.9
(22) Date of filing: 17.01.2019
(51) Int. Cl.: H01M 8/0232

(54) **FUEL-CELL PLATE AND FLOW STRUCTURE DESIGNS**
BRENNSTOFFZELLENPLATTE UND VERTEILERSTRUKTURDESIGNS
PLAQUE POUR PILE À COMBUSTIBLE ET CONCEPTION DE STRUCTURE D'ÉCOULEMENT DE FLUIDE

(30) Priority: 17.01.2018 US 201862618223 P
(43) Date of publication of application: 25.11.2020
(73) Proprietor: Nuvera Fuel Cells, LLC, Billerica, MA 01821 (US)
(72) Inventor: GAMBINI, Filippo, Boston, MA 02109 (US); BURAND, Patrick, Winthrop, MA 02152 (US); DOMIT, Edward, Westford, MA 01886 (US); BAUGHER, Andrew, Brookline, MA 02445 (US)
(74) Representative: Finnegan Europe LLP
(86) International application number: PCT/US2019/013950
(87) International publication number: WO 2019/143781

(56) References cited:
- EP-A1- 1 046 723
- EP-A1- 1 305 836
- US-A1- 2013 337 366

## Description

The present disclosure is directed towards electrochemical cells, and more particularly, to electrochemical cells with improved plate and flow structure surface designs.

Electrochemical cells, usually classified as fuel cells or electrolysis cells, are devices used for generating current from chemical reactions, or inducing a chemical reaction using a flow of current. For example, a fuel cell converts the chemical energy of fuel (e.g., hydrogen, natural gas, methanol, gasoline, etc.) and an oxidant (air or oxygen) into electricity and waste products of heat and water. A basic fuel cell comprises a negatively charged anode, a positively charged cathode, and an ion-conducting material called an electrolyte.

Different fuel cell technologies utilize different electrolyte materials. A Proton Exchange Membrane (PEM) fuel cell, for example, utilizes a polymeric ion-conducting membrane as the electrolyte. In a hydrogen PEM fuel cell, hydrogen atoms are electrochemically split into electrons and protons (hydrogen ions) at the anode. The electrons then flow through the circuit to the cathode and generate electricity, while the protons diffuse through the electrolyte membrane to the cathode. At the cathode, hydrogen protons combine with electrons and oxygen (supplied to the cathode) to produce water and heat.

An electrolysis cell represents a fuel cell operated in reverse. A basic electrolysis cell functions as a hydrogen generator by decomposing water into hydrogen and oxygen gases when an external electric potential is applied. The basic technology of a hydrogen fuel cell or an electrolysis cell can be applied to electrochemical hydrogen manipulation, such as, electrochemical hydrogen compression, purification, or expansion. Electrochemical hydrogen manipulation has emerged as a viable alternative to the mechanical systems traditionally used for hydrogen management. Successful commercialization of hydrogen as an energy carrier and the long-term sustainability of a "hydrogen economy" depend largely on the efficiency and cost-effectiveness of fuel cells, electrolysis cells, and other hydrogen manipulation/management systems.

In operation, a single fuel cell can generally generate about 1 volt. To obtain the desired amount of electrical power, individual fuel cells are combined to form a fuel cell stack, wherein fuel cells are stacked together sequentially. Each fuel cell may include a cathode, an electrolyte membrane, and an anode. A cathode / membrane / anode assembly constitutes a "membrane electrode assembly," or "MEA," which is typically supported on both sides by bipolar plates. Reactant gases or fuel (e.g., hydrogen) and oxidant (e.g., air or oxygen) are supplied to the electrodes of the MEA through flow fields. In addition to providing mechanical support, the bipolar plates (also known as flow field plates or separator plates) physically separate individual cells in a stack while electrically connecting them. A fuel cell stack may include manifolds and inlet ports for directing the fuel and oxidant to the anode and cathode flow fields, respectively. A fuel cell stack also includes exhaust manifolds and outlet ports for expelling the excess fuel and oxidant. A fuel cell stack may also include manifolds for circulating coolant fluid to help expel heat generated by the fuel cell stack.

There is an ongoing need to improve the reliability, performance characteristics, and robustness of fuel cells while decreasing the cost of manufacture. For example, it is often desirable to decrease the contact resistance between components in the fuel cell stack, which can increase the rate at which chemical reactions occur within the fuel cell stack. In some prior fuel cell stacks, plates within the cells have been coated in order to lower the contact resistance. However, coated plates usually increase the cost of manufacturing a fuel cell stack. In some cases, applying coatings to decrease contact resistance may be costprohibitive. An alternative to such coatings may therefore be desirable.

Additionally, to prevent leaking of fuel and/or oxidant across the MEA of a fuel cell (e.g., crossover), a gasket(s) surrounding the MEA has been utilized to separate the anode and cathode compartment. However, in order to avoid or reduce the risk of the gasket being punctured by adjacent structures (e.g., flow field structures) the thickness of the gasket has been increased, but this can result in the overall thickness and/or volume of the fuel cell increasing. An alternative to using a thicker gasket to prevent gasket puncture may therefore be desirable.

The disclosed fuel-cell plate and flow structure designs are directed to overcoming one or more problems set forth above and/or other problems with existing technologies.

US 2013/337366 discloses flow structures for use within electrochemical cells. The flow structure comprises a compacted porous metallic substrate and at least one micro-porous material layer laminated on one side of the compacted porous metallic substrate.

In one aspect, the present disclosure is directed to an electrochemical cell stack according to claim 1. The electrochemical cell stack comprises a plurality of electrochemical cells stacked along a longitudinal axis. One or more of the plurality of electrochemical cells comprises a membrane electrode assembly including a cathode catalyst layer, an anode catalyst layer, and a polymer membrane interposed between the cathode catalyst layer and the anode catalyst layer. One or more of the plurality of electrochemical cells also includes an anode plate and a cathode plate with the membrane electrode assembly interposed therebetween; and a cathode flow field positioned between the cathode plate and the cathode catalyst layer. The cathode flow field comprises a porous structure. The anode plate may define a plurality of channels that form an anode flow field facing the anode catalyst layer. At least one of the anode plate or the cathode plate may be formed of an uncoated 316 stainless steel alloy. One or more portions of one or more surfaces on the anode plate may have an arithmetic average roughness from about 330 nm to about 710 nm (about 13 µin to about 28 µin). One or more portions of one or more surfaces on the anode plate may have an arithmetic average roughness from about 130 nm to about 890 nm (about 5 µin to about 35 µin). One or more of the plurality of electrochemical cells may include an anode plate with all surfaces have an arithmetic average roughness from about 330 nm to about 710 nm (about 13 µin to about 28 µin). One or more of the plurality of electrochemical cells may include one or more portions of one or more surfaces on the cathode plate have an arithmetic average roughness from about 330 nm to about 710 nm (about 13 µin to about 28 µin). One or more of the plurality of electrochemical cells may include one or more portions of one or more surfaces on the cathode plate have an arithmetic average roughness from about 130 nm to about 890 nm (about 5 µin to about 35 µin). One or more of the plurality of electrochemical cells may include a cathode plate with all surfaces having an arithmetic average roughness from about 330 nm to about 710 nm (about 13 µin to about 28 µin). One or more of the plurality of electrochemical cells comprises a porous structure having one or more surface regions on a first side of the porous structure that are smooth, wherein the one or more surface regions face the membrane electrode assembly and the one or more surface regions align with a subgasket of the membrane electrode assembly. A first side of the porous structure may be smooth such that an arithmetic average roughness of the first side is less than about 2500 nm (about 100 µin), and the first side may face the membrane electrode assembly.
In another aspect, the present disclosure is directed to an electrochemical cell according to claim 9. The electrochemical cell comprises a membrane electrode assembly comprising a cathode catalyst layer, an anode catalyst layer, and a polymer membrane interposed between the cathode catalyst layer and the anode catalyst layer. The electrochemical cell comprises an anode plate and a cathode plate with the membrane electrode assembly interposed therebetween, and a cathode plate positioned adjacent the cathode catalyst layer. The electrochemical cell comprises a cathode flow field positioned between the cathode plate and the cathode catalyst layer, with the cathode flow field including a porous structure. The anode plate may define a plurality of channels that form an anode flow field facing the anode catalyst layer. At least one of the anode plate or the cathode plate may be formed of an uncoated 316 stainless steel alloy. One or more portions of one or more surfaces on the anode plate may have an arithmetic average roughness from about 330 nm to about 710 nm (about 13 µin to about 28 µin). One or more portions of one or more surfaces on the anode plate may have an arithmetic average roughness from about 130 nm to about 890 nm (about 5 µin to about 35 µin). The electrochemical cell may include an anode plate with all surfaces having an arithmetic average roughness from about 330 nm to about 710 nm (about 13 µin to about 28 µin). One or more portions of one or more surfaces on the cathode plate may have an arithmetic average roughness from about 330 nm to about 710 nm (about 13 µin to about 28 µin). One or more portions of one or more surfaces on the cathode plate may have an arithmetic average roughness from about 130 nm to about 890 nm (about 5 µin to about 35 µin). The electrochemical cell may include a cathode plate with all surfaces having an arithmetic average roughness from about 330 nm to about 710 nm (about 13 µin to about 28 µin). The porous structure has one or more surface regions on a first side of the porous structure that are smooth. The one or more surface regions face the membrane electrode assembly. The one or more surface regions align with a subgasket of the membrane electrode assembly.

Also disclosed is an electrochemical cell with a cathode flow field positioned between a cathode plate and a membrane electrode assembly. The cathode flow field may include a porous structure. One or more surface regions on a first side of the porous structure may be smooth. The first side may face the membrane electrode assembly, and at least one of the one or more surface regions may align with a subgasket of the membrane electrode assembly. The entire first side of the porous structure may be a smooth surface. The one or more surface regions have an arithmetic average roughness of less than about 2500 nm (about 100 µin). A second side of the porous structure may have a first cathode distribution channel and a second cathode distribution channel recessed into a surface of the porous structure facing the cathode plate. The porous structure may include a plurality of support features formed throughout the first cathode distribution channel and the second cathode distribution channel. The porous structure may include at least nickel, tin, and chromium. The porous structure may include a nickel concentration of about 60% to about 80% by mass and a chromium concentration of about 20% to about 40% by mass, and at least one surface of the porous structure may include a chromium concentration of about 3% to about 50% by mass. The porous structure may have a chromium concentration of about 3% to about 6%, a tin concentration of about 10% to about 20%, and a nickel concentration of about 74% to about 87%. At least one surface of the porous structure may include a chromium concentration of about 10% to about 45% by mass. A first surface of the porous structure may have a higher chromium concentration than an opposite second surface. The first surface may have a chromium concentration ranging from about 3% to about 50% by mass and the second surface has a chromium concentration less than about 3% by mass.

It is to be understood that both the foregoing general description and the following detailed description are exemplary and explanatory only and are not restrictive of the disclosure, as claimed.

The accompanying drawings, which are incorporated herein and constitute a part of this specification, illustrate embodiments of the present disclosure and, together with the description, serve to explain the principles of the disclosure.
Fig. 1 is a side schematic view of a plurality of electrochemical cells (e.g., fuel cells) stacked together, according to an exemplary embodiment.
Fig. 2 is a partially exploded side-perspective view of portions of adjacent fuel cells of Fig. 1, according to an exemplary embodiment.
Fig. 3 is a front view of an anode plate of Fig. 2, according to an exemplary embodiment.
Fig. 4 is a front view of a cathode plate of Fig. 2, according to an exemplary embodiment.
Fig. 5 is a front view of a cathode flow field of Fig. 2, according to an exemplary embodiment.
FIG. 6 is a back view of a cathode flow field of Fig. 2, according to an exemplary embodiment.

Reference will now be made in detail to exemplary embodiments of the present disclosure, examples of which are illustrated in the accompanying drawings. Wherever possible, the same reference numbers will be used throughout the drawings to refer to the same or like parts. Although described in relation to an electrochemical cell for generating electricity, it is understood that the devices and methods of the present disclosure may be employed with various types of fuel cells or electrochemical cells, including, but not limited to, electrolysis cells, hydrogen purifiers, hydrogen expanders, and hydrogen pumps.

Throughout the specification the terms "generally parallel" and "generally perpendicular" may be used to describe the arrangement of one or more components in relation to an axis, plane, or other component. The degree of offset from parallel and perpendicular that can be tolerated when describing an arrangement as "generally parallel" or "generally perpendicular" can vary. The allowable offset may be, for example, less than about 20 degrees off, such as an offset less than about 10 degrees, an offset of less than about 5 degrees, and offset of less than about 3 degrees, an offset of less than about 2 degrees, and an offset of less than about 1 degree.

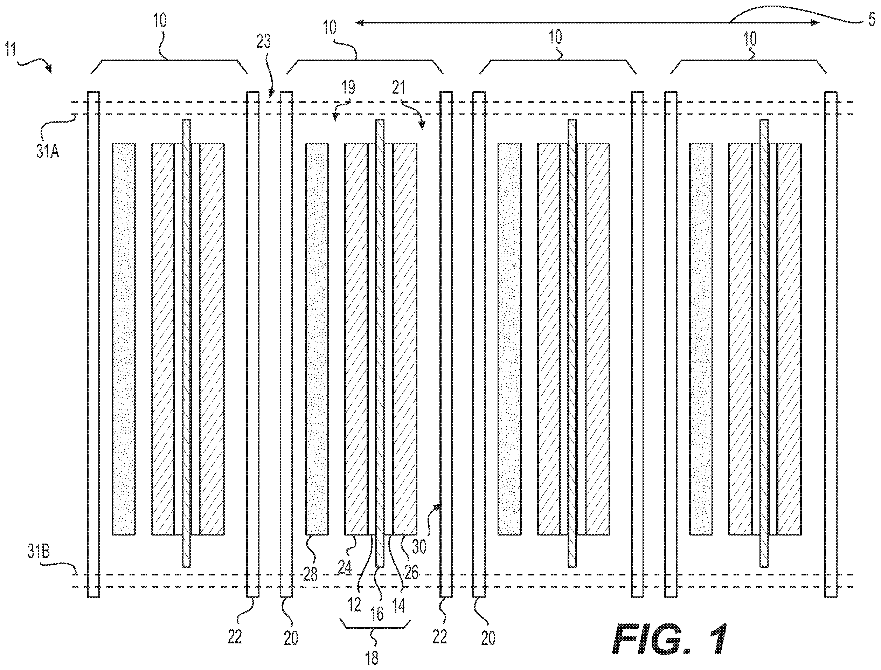

Fig. 1 is a side schematic side view of a plurality of electrochemical cells, for example, fuel cells 10 stacked together along a longitudinal axis 5 to form at least a portion of a fuel cell stack 11, according to an exemplary embodiment. A fuel cell 10 comprises a cathode catalyst layer 12, which may also be referred to herein as a cathode, an anode catalyst layer 14, which may also be referred to herein a anode, and a proton exchange membrane (PEM) 16 disposed between cathode catalyst layer 12 and anode catalyst layer 14, which collectively may be referred to as a membrane electrode assembly (MEA) 18. PEM 16 can comprise a pure polymer membrane or composite membrane with other material, for example, silica, heteropolyacids, layered metal phosphates, phosphates, and zirconium phosphates can be embedded in a polymer matrix. PEM 16 can be permeable to protons while not conducting electrons. Cathode catalyst layer 12 and anode catalyst layer 14 can comprise porous carbon electrodes containing a catalyst. The catalyst material, which may be, for example, platinum, a platinum-cobalt alloy, or a non-platinum-group metal, can increase the reaction of oxygen and fuel. In some embodiments, cathode catalyst layer 12 and anode catalyst layer 14 may have an average pore size of about 1 µm.

Fuel cell 10 comprises two bipolar plates: a cathode plate 20 and an anode plate 22. Cathode plate 20 is positioned adjacent cathode catalyst layer 12 and anode plate 22 is positioned adjacent anode catalyst layer 14. MEA 18 is interposed and enclosed between cathode plate 20 and anode plate 22. A cathode compartment 19 may be formed between MEA 18 and cathode plate 20 and an anode compartment 21 may be formed between MEA 18 and anode plate 22. Cathode plate 20 and anode plate 22 can act as current collectors, provide access flow passages for fuel and oxidant to the respective electrode surfaces (e.g., anode catalyst layer 14 and cathode catalyst layer 12), and provide flow passages for the removal of water formed during operation of fuel cell 10. Cathode plate 20 and anode plate 22 can also define flow passages for coolant fluid (e.g., water, glycol, or water glycol mixture). For example, between cathode plate 20 and anode plate 22 of adjacent fuel cells 10 a coolant compartment 23 may be formed, which is configured to circulate coolant fluid between adjacent fuel cells 10. Heat generated by fuel cells 10 can be transferred to the coolant fluid and be carried away by the circulation of the coolant fluid. Cathode plate 20 and anode plate 22 may be made from, for example, aluminum, steel, stainless steel, titanium, copper, Ni-Cr alloy, graphite or any other suitable electrically conductive material.

In some embodiments, for example, as illustrated in Fig. 1, fuel cell 10 may also include electrically-conductive gas diffusion layers (e.g., cathode gas diffusion layer 24 and anode gas diffusion layer 26) within fuel cell 10 on each side of MEA 18. Gas diffusion layers 24, 26 may serve as diffusion media enabling the transport of gases and liquids within the cell, provide electrically conduction between cathode plate 20, anode plate 22, and MEA 18, aid in the removal of heat and process water from fuel cell 10, and in some cases, provide mechanical support to PEM 16. Gas diffusion layers 24, 26 can comprise a woven or non-woven carbon cloth with cathode catalyst layer 12 and anode catalyst layer 14 coated on the sides facing PEM 16. In some embodiments, cathode catalyst layer 12 and anode catalyst layer 14 may be coated onto either the adjacent GDL 24, 26 or PEM 16. In some embodiments, gas diffusion layers 24, 26 may have an average pore size of about 10 µm.

Fuel cell 10 may further include flow fields positioned on each side of MEA 18. For example, fuel cell 10 may include a cathode flow field 28, which may comprise a porous structure positioned between cathode plate 20 and GDL 24 and an anode flow field 30, which may be formed by anode plate 22, as described further herein. The flow fields may be configured to enable fuel and oxidant on each side of MEA 18 to flow through the fields and reach MEA 18. These flow fields may facilitate even distribution of fuel and oxidant to cathode and anode catalyst layers 12, 14. Even distribution of fuel and oxidant to the catalyst layers 12, 14 may increase the performance of fuel cell 10. GDL 24 may provide mechanical protection of cathode catalyst layer 12 from cathode flow field 28.

It is to be understood that although only one fuel cell 10 in Fig. 1 includes reference numerals for cathode catalyst layer 12, anode catalyst layer 14, proton exchange membrane 16, membrane electrode assembly (MEA) 18, cathode compartment 19, cathode plate 20, anode compartment 21, anode plate 22, coolant compartment 23, gas diffusion layer 24, gas diffusion layer 26, cathode flow field 28, and anode flow field 30, the other fuel cells 10 of stack 11 may include the same elements.

Fuel cell stack 11 may also include a plurality of fluid manifolds 31A, 31B extending along longitudinal axis 5 defined by the series of stacked cathode plates 20 and anode plates 22 of fuel cells 10. Fluid manifolds 31A, 31B may be configured for feeding fuel (e.g., hydrogen) and oxidant (e.g., oxygen) to MEA 18 of each fuel cell 10 and discharging reactant products (e.g., unreacted fuel, unreacted oxidant, and water) from MEA 18 of each fuel cell. Fluid manifolds 31A, 31B may also be configured for feeding and discharging coolant fluid through coolant compartments 23. The direction of flow through fluid manifolds 31A, 31B, cathode compartments 19, anode compartments 21, and coolant compartments 23 may vary. For example, in some embodiments the flow through the manifolds and compartments may be concurrent while in other embodiments, one or more of the flow paths may be countercurrent. For example, in some embodiments, the flow of fuel through anode compartment 21 may be countercurrent to the flow of oxidant through cathode compartments 19. Fluid manifolds 31A, 31B may fluidly connect to MEA 18 via passages and ports. Specific manifolds, passages, and ports may be identified herein as "feed," "discharge," "inlet," or "outlet," but it is to be understood these designations may be determined based on the direction of flow and the direction of flow may be switched. Changing the direction of flow may change these designations.

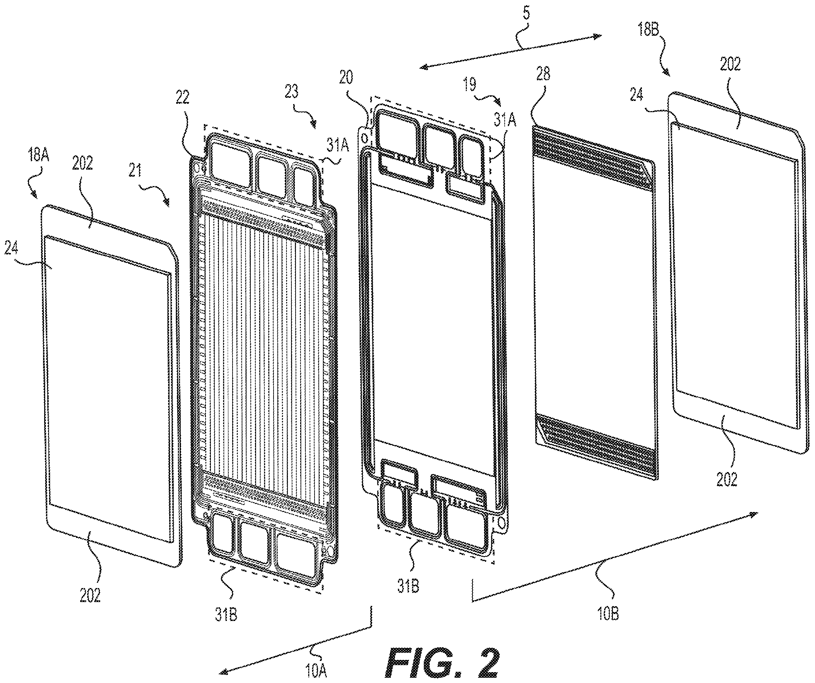

Fig. 2 shows a partially exploded side-perspective view of portions of adjacent fuel cells 10. For example, Fig. 2 shows MEA 18A, GDL 24A, and anode plate 22 of one fuel cell 10A and also cathode plate 20, cathode flow field 28, MEA 18B, and GDL 24B of an adjacent fuel cell 10B. Anode compartment 21 may be formed between MEA 18A and anode plate 22. Coolant compartment 23 may be formed between adjacent anode plate 22 and cathode plate 20. Cathode compartment 19 may be formed between cathode plate 20 and MEA 18B. Cathode compartment 19 may contain cathode flow field 28. As shown in Fig. 2, fuel cells 10 may include fluid manifolds 31A, 31B, which may also be referred to as upper and lower fluid manifolds. Fluid manifolds 31A and 31B may extend along longitudinal axis 5. MEAs 18A, 18B may comprise a subgasket 202 around PEM 16. Subgasket 202 may be made of plastic. Subgasket 202 of a given MEA (e.g., MEA 18A) may prevent fuel within anode compartment 21 from leaking into cathode compartment 19 on the other side of the MEA (e.g., MEA 18A) (not shown).

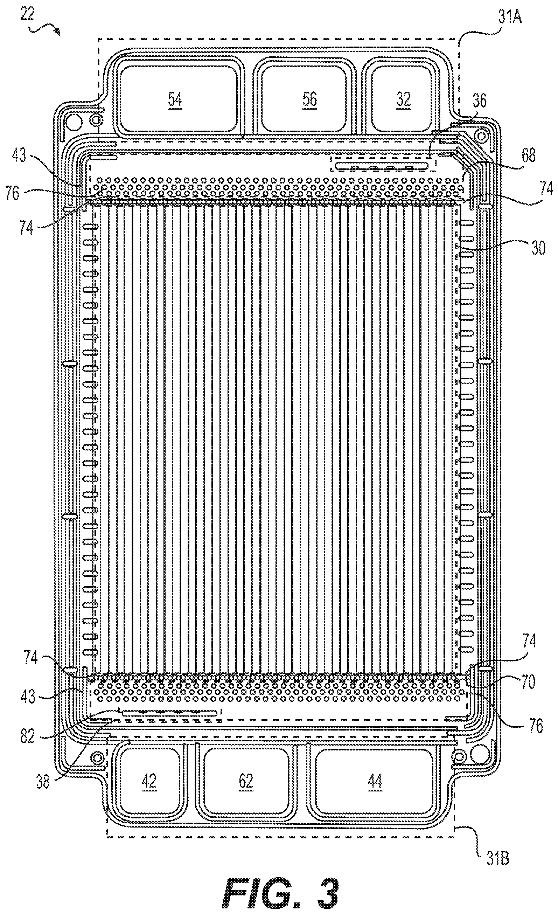

Fig. 3 is a front view of anode plate 22, according to exemplary embodiment. The side visible in Fig. 3 is the side configured to face the anode side of MEA 18 (i.e., anode catalyst layer 14 and gas diffusion layer 26) and define one side of anode compartment 21 (see, e.g., Figs. 1 and 2). Anode plate 22 may include several sections. These sections may include for example, first manifold section 31A and second manifold section 31B; distribution channel sections such as a first anode distribution channel 68 and a second anode distribution channel 70; and anode flow field 30. As shown in Fig. 3, anode plate 22 may include anode feed manifold 32, cathode discharge manifold 54, and coolant feed manifold 56 in first manifold section 31A while second manifold section 31B may include anode discharge manifold 42, cathode feed manifold 44, and coolant discharge manifold 62. It is to be understood, that the designation of inlet and outlet for each manifold may be switched, for example, by switching the respective flow direction of the fuel, the oxidant, or the coolant fluid flow through fuel cells 10.

The cross-sectional area of each manifold can vary. For example, as shown in Fig. 3, cathode feed and discharge manifolds 44, 54 may have larger cross-sectional areas than coolant feed and discharge manifolds 56, 62 while coolant feed and discharge manifolds 56, 62 may have larger cross-sectional areas than anode feed and discharge manifolds 32, 42. The cross-sectional area of each passage may be determined based on a variety of variables, including for example, the number of cells, current density at peak-power operating conditions, design stoichiometry of the reactants, the difference between the inlet and outlet coolant temperature, flow resistance of individual cells, the size of active area, fluid pressure, and fluid flow rate. The cross-sectional area of one or more passages may be sized so as to minimize fluid pressure variations along the length of the electrochemical cell stack, such as during high fluid flow rates.

The arrangement of the manifolds within first manifold section 31A and second manifold section 31B can also vary. As shown in Fig. 3, the arrangement of the manifolds may be different between first manifold section 31A and second manifold section 31B. In one illustrative example, as shown in Fig. 3, coolant feed manifold 56 may be positioned between anode feed manifold 32 and cathode discharge manifold 54, and coolant discharge manifold 62 may be positioned between anode discharge manifold 42 and cathode feed manifold 44. In some embodiments, cathode discharge manifold 54 may be left of coolant feed manifold 56 and anode feed manifold 32 may be right of coolant feed manifold 56 while cathode feed manifold 44 may be right of coolant discharge manifold 62 and anode discharge manifold 42 may be left of coolant discharge manifold 62. Swapping the positioning of the anode and cathode manifolds relative to the coolant manifolds between first manifold section 31A and second manifold section 31B may promote a diagonal cross countercurrent flow or "z-flow" rather than a straight-across flow. The diagonal cross countercurrent flow may provide improved uniform distribution of fuel and oxidant in anode compartment 21 and cathode compartment 19, which may improve fuel cell performance. The performance may be improved because the diagonal cross countercurrent flow may maximize the active area utilized. In the z-flow pattern, the stream-path distance from inlet to outlet for one or more reactants may be substantially uniform regardless of the flow path. This symmetry may result in fluids distributing and flowing uniformly throughout the flow field. Uniform flow throughout the flow field 30 (discussed further below with respect to Fig. 3) may result in more uniform and/or linear gradients of reactant composition and coolant temperature, which may result in uniform and/or linear gradients of cell temperature. This may result in higher performance and/or lower variance in performance between cells.

The positioning of the coolant manifolds 56, 62 in the center of first fluid manifold 31A and second fluid manifold 31B may result in the central region of the coolant compartment receiving the most coolant fluid flow. The central region of the coolant compartment may correspond to the central region of the active area of fuel cell 10. The central region of the active area of fuel cell 10 may experience increased heat generation and/or a tendency for a higher operating temperature than other regions of the active area. The sides of fuel cell 10 may be cooled by ambient cooling. In some embodiments, the region of fuel cell 10 that may tend toward operating at a higher temperature may correspond with the region receiving the most coolant fluid flow.

As shown in Fig. 3, disposed between first and second manifold sections 31A, 31B and anode flow field 30 are first and second anode distribution channels 68, 70. First anode distribution channel 68 may be configured to distribute fuel supplied from anode feed manifold 32 via anode inlet port 36 to anode flow field 30. Second anode distribution channel 70 may be configured to collect fuel (e.g., unreacted fuel) from anode flow field 30 and direct fuel through anode outlet port 38 to anode discharge manifold 42. First anode distribution channel 68 and second anode distribution channel 70 may be sandwich between and defined by MEA 18 and anode plate 22. Perimeters of first anode distribution channel 68 and second anode distribution channel 70 may be sealed by surface gaskets 43, as illustrated in Fig. 3. Surface gaskets 43 may be made of a polymeric or elastomeric material such as silicone, Viton, Buna, polyethylene, polypropylene, or any other suitable seal material. The cross-sectional shape of the gaskets can be rectangular, triangular, semi-circular, multi-tooth (triangle), or parabolic. The shape may be determined by the acceptable leak rate, operating pressures, tolerance make-up, or other significant sealing design parameters. Surface gaskets 43 can be applied with any known method such as injection molding, compression molding, pick-and-place, robotic dispensing, and may be adhered directly through a molding process or with the aid of pressure or temperature-sensitive adhesives. Curing of surface gaskets 43 can be accomplished by known processes such as thermal curing, ultraviolet-light curing, or humidity curing. In some embodiments, the width of first anode distribution channel 68 and the width of second anode distribution channel 70 may generally equal the width of anode flow field 30.

First anode distribution channel 68 may be configured so fuel supplied through anode inlet port 36 may be distributed across first anode distribution channel 68 and directed to anode flow field 30 through a plurality of openings 74. In some embodiments, each opening 74 may be configured as an orifice to produce some back pressure on the fuel within first anode distribution channel 68. The back pressure may promote the distribution of fuel within first anode distribution channel 68, thereby ensuring first anode distribution channel 68 is fully flooded with fuel. In some embodiments, fully flooding first anode distribution channel 68 may enable fuel to be delivered to substantially all channels of anode flow field 30 through substantially all of openings 74. In some embodiments, fully flooding first anode distribution channel 68 may prevent or reduce the risk of short circuiting the flow of fuel along a path of least resistance through anode flow field 30, which could reduce the performance of fuel cells 10 due to the reduction in active area being utilized. In some embodiments, orifice openings 74 may be sized to enable the minimum amount of back pressure needed to ensure full flooding of first anode distribution channel 68. As illustrated in Fig. 3, second anode distribution channel 70 may be configured the same as first anode distribution channel 68 with a plurality of orifice shaped openings 74 fluidly connecting the channels of anode flow field 30 and second anode distribution channel 70. Openings 74 may have a smaller cross-sectional area than the corresponding channel in anode flow field 30. Channels in anode flow field 30, although shown as straight paths, may be wavy or zig-zag paths. Channels in anode flow field 30 have a cross-sectional area that is generally square, semi-circular, parabolic, or any other shape.

Compression of fuel cells 10 during assembly and the compressed state maintained during operation may compromise the flow path integrity within distribution channels. For example, compression of fuel cells 10 may cause the volume of the distribution channels to decrease, which can restrict flow of fuel, oxidant, and coolant through fuel cells 10 and increase the pressure drop across fuel cells 10. To prevent or minimize shrinking or collapsing of first anode distribution channel 68 and second anode distribution channel 70 when fuel cell 10 is compressed, first anode distribution channel 68 and/or second anode distribution channel 70 may, in some embodiments, include a plurality of support features 76 spread throughout the distribution channels. Support features 76 may be formed as integrated features of anode plate 22. Support features 76 may be evenly spaced throughout first anode distribution channel 68 and second anode distribution channel 70.

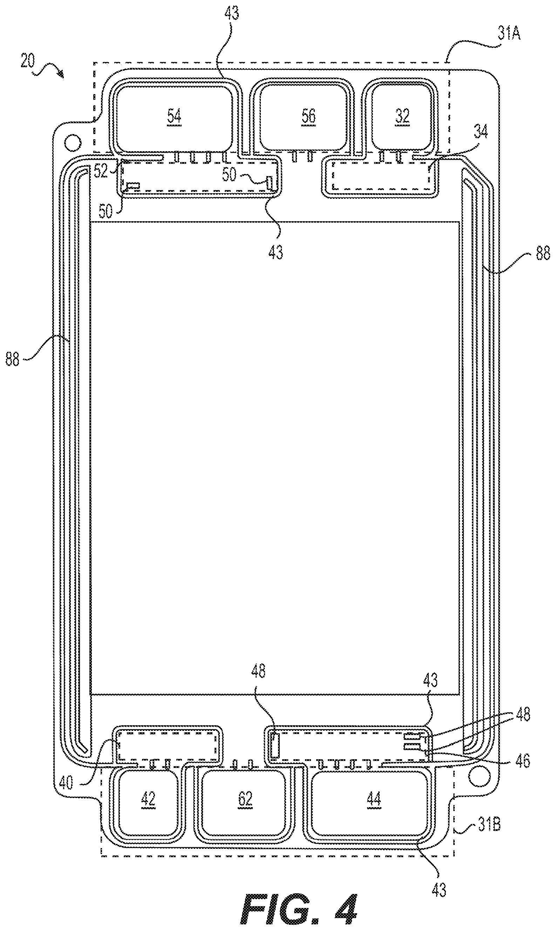

Fig. 4 is a front view of cathode plate 20, according to exemplary embodiment. The side visible in Fig. 4 is the side configured to face adjacent anode plate 22 (see, e.g., Fig. 2). Cathode plate 20 may include a first manifold section 31A and a second manifold section 31B like anode plate 22. As shown in Fig. 4, cathode plate 20 may include anode feed manifold 32, cathode discharge manifold 54, and coolant feed manifold 56 in first manifold section 31A while second manifold section 31B may include anode discharge manifold 42, cathode feed manifold 44, and coolant discharge manifold 62. It is to be understood that the designations of "inlet" or "outlet" for each manifold may be switched, for example, by switching the flow direction of the fuel, the oxidant, or the coolant fluid through fuel cells 10.

Cathode plate 20 may include a plurality of cathode inlet ports 48 configured to fluidly connect cathode compartment 19 and cathode flow field 28 with cathode feed manifold 44 via a cathode inlet passage 46. Cathode plate 20 may also include a plurality of cathode outlet ports 50 configured to fluidly connect cathode compartment 19 and cathode flow field 28 with cathode discharge manifold 54 via a cathode outlet passage 52. Cathode inlet and outlet passages 46, 52 may be located between anode plate 22 and cathode plate 20 of adjacent fuel cells 10. Perimeters of cathode inlet and outlet passages 46, 52, as well as cathode feed and discharge manifolds 44, 54, may be sealed by surface gaskets 43, as illustrated in Fig. 4.

Cathode inlet and outlet ports 48, 50 may be generally rectangular shaped as illustrated in Fig. 4. Cathode plate 20 may be configured to have at least two-for example, in some embodiments, three-cathode inlet ports 48, which may be arranged generally perpendicular to one another, as illustrated in Fig. 4. Cathode plate 20 may be configured to have at least two cathode outlet ports 50 arranged generally perpendicular to one another, as illustrated in Fig. 4. Cathode plate 20 may be configured to have at least one cathode inlet port 48 positioned at opposite ends of cathode inlet passage 46. Cathode plate 20 may be configured to have at least one cathode outlet port 50 positioned at opposite ends of cathode outlet passage 52. Cathode plate may be configured to have two cathode inlet ports 48 positioned at one end of cathode inlet passage 46 and one cathode inlet port 48 positioned at the opposite end. The two cathode inlet ports 48 positioned at one end may be generally parallel to one another and generally perpendicular to the cathode inlet passage 46 positioned at the opposite end of cathode inlet passage 46. The shape and arrangement of cathode inlet ports 48, as described herein, may promote distribution of the oxidant as it flows into cathode compartment 19. In some embodiments, increasing the ratio of a port's perimeter to the port's area may decrease the pressure drop across the port. In some embodiments, the ports' perpendicular arrangement may result in a lower pressure drop across the port.

The total inlet area of the plurality of cathode inlet ports 48 may be greater than a total outlet area of the cathode outlet ports 50. Cathode outlet ports 50 having a total outlet area less than the total inlet area can produce a back pressure on oxidant flow through cathode compartment 19 and cathode flow field 28. Such back pressure may promote distribution of oxidant across the cathode compartment.

As shown in Fig. 4, cathode plate 20 may include surface features, for example, cathode flow field borders 88 that protrude out from cathode plate 20 toward MEA 18 along the sides of cathode flow field 28 (see, e.g., Fig. 2). As shown in Fig. 4, cathode flow field borders 88 may span between first fluid manifolds 31A and second fluid manifolds 31B along opposite sides of cathode plate 20. Cathode flow field borders 88 may be configured to prevent or reduce the amount of flow of oxidant bypassing cathode flow field 28 and cathode catalyst layer 12 by flowing along the outside of cathode flow field 28 rather than flowing through cathode flow field 28 to cathode catalyst layer 12. For example, cathode flow field borders 88 can act as border walls on each side of cathode flow field 28 thereby forcing oxidant flow through cathode flow field 28. Cathode plate 20 may be configured so that a distance between cathode flow field borders 88 is about equal to the width of cathode flow field 28. Cathode flow field borders 88 may be configured to protrude from cathode plate 20 an amount equal to the depth of cathode flow field 28. Cathode flow field borders 88 may be generally rectangular shaped with rounded or chamfered outer corners, as shown in Fig. 4. Cathode flow field borders 88 may be arranged to provide a barrier along the edges of cathode flow field 28 to prevent fluid from flowing along the length of cathode flow field 28 via a substantially open flow area. Cathode flow field borders 88 may be formed into cathode plate 20 (as shown in Fig. 4) and/or may be formed by applying a second material to cathode plate 20 (e.g., a polymer or elastomer bonded to the plate).

Anode plate 22 and/or cathode plate 20 may be manufactured from an alloy such as 316L stainless steel. In some embodiments, the alloy may be an uncoated alloy, such as uncoated 316L stainless steel alloy or another uncoated stainless steel alloy such as 316, 304, 304L, and/or 310. One or more surfaces of anode plate 22 and/or cathode plate 20 may have a surface roughness that may facilitate a lower electrical contact resistance between one or more plate surfaces and other surfaces. A lower electrical contact resistance between one or more plate surfaces and other surfaces may increase the rate at which chemical reactions occur within fuel cell stack 11. Increasing the rate at which chemical reactions occur within fuel cell stack 11 may increase the current and/or voltage capabilities of fuel cell stack 11. A lower electrical contact resistance between GDL 26 on MEA 18A and anode plate 22 may increase the flow of electrons from anode catalyst layer 14 through GDL 26 to anode plate 22. A lower electrical contact resistance between anode plate 22 and cathode plate 20 may increase the flow of electrons between adjacent anode plate 22 and to cathode plate 20. A lower electrical contact resistance between cathode plate 20 and cathode flow field 28 may increase the flow of electrons from cathode plate 20 to cathode flow field 28. An increase flow of electrons to the cathode flow field may increase rate at which hydrogen ions from GDL 24 on MEA 18B combine with oxygen atoms and the electrons into water molecules.

The surface roughness of anode plate 22 and/or cathode plate 20 may be substantially uniform across the surface of the plates, including for example, at the one or more aforementioned interfaces. In some embodiments, different surfaces of anode plate 22 and/or cathode plate 20 may have different roughness parameters. In some embodiments, one or more portions of one or more surfaces of anode plate 22 and/or cathode plate 20 may have an arithmetic average roughness ranging from about 130 nm to about 890 nm (about 5 µin to about 35 µin), about 250 nm to about 890 nm (about 10 µin to about 35 µin), about 380 nm to about 890 nm (about 15 µin to about 35 µin), about 510 nm to about 890 nm (about 20 µin to about 35 µin), about 640 nm to about 890 nm (about 25 µin to about 35 µin), about 760 nm to about 890 nm (about 30 µin to about 35 µin), about 130 nm about 760 nm (about 5 µin to about 30 µin), about 130 nm about 640 nm (about 5 µin to about 25 µin), about 130 nm to about 510 nm (about 5 µin to about 20 µin), about 130 nm to about 380 nm (about 5 µin to about 15 µin), about 130 nm to about 250 nm (about 5 µin to about 10 µin), about 250 nm to about 760 nm (about 10 µin to about 30 µin), about 330 nm to about 710 nm (about 13 µin to about 28 µin), about 250 nm to about 640 nm (about 10 µin to about 25 µin), about 380 nm to about 510 nm (about 15 µin to about 20 µin), about 410 nm to about 480 nm (about 16 µin to about 19 µin), about 430 nm to about 460 nm (about 17 µin to about 18 µin), about 440 nm to about 470 nm (about 17.5 µin to about 18.5 µin), about 440 nm to about 460 nm (about 17.5 µin to about 18 µin), about 440 nm (about 17.5 µin), about 460 nm (about 18 µin), or about 470 nm (about 18.5 µin). The surface roughness may be produced by a variety of suitable methods, including for example, stamping, etching, abrading, or rolling of the anode plate 22 and/or cathode plate 20 before, during, or after forming. In some embodiments, for example where surface texture may be stamped into the anode plate 22 and/or cathode plate 20, because the aforementioned interfaces generally occur at the raised features (e.g., high points) of the anode plate 22 and/or cathode plate 20, dies configured with surface texture corresponding to the raised features may be utilized. This may be advantageous to reduce tooling complexity.

In some embodiments, all surface of anode plate 22 and/or cathode plate 20 may have an arithmetic average roughness ranging from about 130 nm to about 890 nm (about 5 µin to about 35 µin), about 250 nm to about 890 nm (about 10 µin to about 35 µin), about 380 nm to about 890 nm (about 15 µin to about 35 µin), about 510 nm to about 890 nm (about 20 µin to about 35 µin), about 640 nm to about 890 nm (about 25 µin to about 35 µin), about 760 nm to about 890 nm (about 30 µin to about 35 µin), about 130 nm to about 760 nm (about 5 µin to about 30 µin), about 130 nm to about 640 nm (about 5 µin to about 25 µin), about 130 nm to about 510 nm (about 5 µin to about 20 µin), about 130 nm to about 380 nm (about 5 µin to about 15 µin), about 130 nm to about 250 nm (about 5 µin to about 10 µin), about 250 nm to about 760 nm (about 10 µin to about 30 µin), about 330 nm to about 710 nm (about 13 µin to about 28 µin), about 250 nm to about 640 nm (about 10 µin to about 25 µin), about 380 nm to about 510 nm (about 15 µin to about 20 µin), about 410 nm to about 480 nm (about 16 µin to about 19 µin), about 430 nm to about 460 nm (about 17 µin to about 18 µin), about 440 nm to about 470 nm (about 17.5 µin to about 18.5 µin), about 440 nm to about 460 nm (about 17.5 to about 18 µin), about 440nm (about 17.5 µin), about 460 nm (about 18 µin), or about 470 nm (about 18.5 µin). For example, a surface on one side of anode plate 22 may have an arithmetic average roughness from about 330 nm to about 710 nm (about 13 µin to about 28 µin). In some embodiments, one or more plate surfaces may have one or more arithmetic average roughness from about 130 nm to about 890 nm (about 5 µin to about 35 µin). The surface roughness values disclosed herein may be measured according to JIS B0601-2001, using Standard Stylus - tip radius: 2 µm, tip angle: 60°.

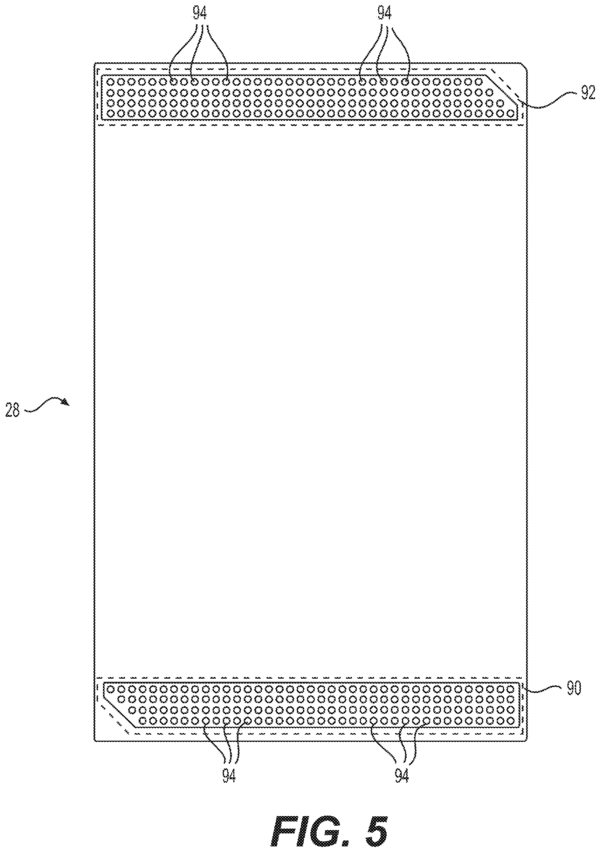

Fig. 5 is a front view of cathode flow field 28, according to exemplary embodiment. The side visible in Fig. 5 is the side configured to face adjacent cathode plate 20 (see, e.g., Fig. 2). Cathode flow field 28 comprises a porous structure, in particular a porous metallic foam structure having a porous three-dimensional network structure. The porous structure may be sheet-shaped with two opposing surfaces. The porous structure may be a screen, an expanded metal mesh, and/or pierced metal sheet. In some embodiments, the porous metallic foam structure may have an average pore size of about 50 µm to about 500 µm. In some embodiments, the average pore size of the porous structure of the first electrochemical cell in the electrochemical cell stack may be about 5% to about 50% greater than the average pore size of the porous structures of at least one other porous structure in the electrochemical cell stack. Cathode flow field 28 may include a first cathode distribution channel 90 and a second cathode distribution channel 92 recessed into the surface of the porous metallic foam structure facing cathode plate 20. Cathode flow field 28 may have a thickness of about .2 mm to about 1.5 mm and first cathode distribution channel 90 and/or second cathode distribution channel 92 may be recessed into cathode flow field by about 10% of the structure's thickness to about 75% of the structures thickness.

First cathode distribution channel 90 may extend generally from one side of cathode flow field 28 to the other side along a bottom edge of cathode flow field 28. Second cathode distribution channel 92 may extend generally from one side of cathode flow field 28 to the other side along a top edge of cathode flow field 28. When cathode flow field 28 is positioned adjacent cathode plate 20, cathode inlet ports 48 may be aligned with first cathode distribution channel 90 and cathode outlet ports 50 may be aligned with second cathode distribution channel 92.

Cathode flow field 28 may include a plurality of support features 94 formed throughout first cathode distribution channel 90 and/or second cathode distribution channel 92. Support features 94 may be generally cylindrical, dimple shaped, or other suitable shape. The height of one or more support features 94 may be about equal to the recess depth of first cathode distribution channel 90 and/or second cathode distribution channel 92. First cathode distribution channel 90, second cathode distribution channel 92, and support features 94 may be formed by stamping, rolling, or otherwise plastically deforming the porous metallic foam structure forming cathode flow field 28.

First cathode distribution channel 90 and second cathode distribution channel 92 may be configured to promote uniform flow distribution of oxidant along a width of cathode flow field 28 by providing an open flow path for the oxidant to flow along before flowing into the pores of the porous metallic foam structure. Support features 94 may be configured to provide adequate support to maintain the open flow path provided by first cathode distribution channel 90 and second cathode distribution channel 92 when fuel cell 10 is compressed by preventing or reducing deformation or deflection of cathode plate 20 into first cathode distribution channel 90 and second cathode distribution channel 92. Support features 94 may provide support during mechanical compression of the electrochemical call stack.

The porous structure making up cathode flow field 28 may include one or more metals and/or alloys. For example, the porous structure may include a combination of at least nickel (Ni) and chromium (Cr) (e.g., NiCr) or nickel, tin (Sn), and chromium (e.g., NiSnCr). For NiCr embodiments of the porous structure the concentrate by mass of chromium can range from about 20% to 40% while nickel may make up the remaining balance-60% to 80%. For NiSnCr embodiments of the porous structure the concentration of chromium can range from about 3% to 6%, the concentration of tin can range from about 10% to 20% while nickel may make up the balance-74% to 87%. The porous structure may comprise titanium or steel.

In some embodiments, at least one surface of the porous structure includes a chromium concentration of about 3% to about 50% by mass. For example, the chromium concentration of one or both surfaces of the porous structure that forms cathode flow field 28 may range from about 3% to about 50%, about 5% to about 40%, or from about 7% to about 40% by mass. Increasing the chromium concentration of the surface of the porous metal body may increase the corrosion resistance of the porous structure in acidic environments. For example, when at least one of the surfaces of the porous metal body forming cathode flow field 28 has a chromium concentration ranging from about 3% to about 50% by mass, the bipolar plate adjacent to the porous metal body may be corrosion resistant in the substantially acidic environment at cathode plate 20. The corrosion resistance that may be provided by the porous structure as described herein may enable cathode plate 20 to be formed of uncoated stainless steel.

In some embodiments, one surface of the porous structure may have a higher chromium concentration than the other surface of the porous structure. In such instances, the surface having the higher chromium concentration may be more corrosion resistant. The surface having the higher chromium concentration may be arranged to face MEA 18. In some embodiments, the more corrosion-resistant surface of the porous structure may have a chromium concentration ranging from about 3% to about 50% by mass while the less corrosion-resistant surface of the metal porous structure may have a chromium concentration of less than about 3% chromium by mass.

The porous structure may be formed by one or more electroplating processes. For example, a resin-molded body may initially be used as a substrate for the three-dimensional network structure. The resin-molded body may include one or more of polyurethane, melamine, polypropylene, polyethylene, or the like. The resin-molded body may include pores in its three-dimensional network structure. In some embodiments, the resin-molded body may have a porosity of about 80% to about 98% and may have a pore size of about 50 µm to about 500 µm. In some embodiments, the resin molded body may have a thickness of about 150 µm to about 5,000 µm, about 200 µm to 2,000 µm, or about 300 µm to about 1,200 µm.

To form the porous structure, metal layers may be plated onto the resin-molded body. For the NiCr embodiments of the porous structure, for example, a nickel layer and a chromium layer may be plated onto the resin-molded body. For the NiSnCr embodiments of the porous structure, for example, a nickel layer, a tin layer, and a chromium layer may be plated onto the resin-molded body. The resin-molded body may be subjected to electrical conduction treatment, such as electroless plating, vapor deposition, sputtering, and/or application of a conductive metal, such as nickel particles, tin particles, and/or carbon particles. A nickel layer and/or a tin layer may be electrically plated on the surface of the three-dimensional structure or the skeletons of the treated resin-molded body. For example, when the resin-molded body is coated with a conductive layer, a nickel layer may be formed on the skeletons of the resin-molded body through an electroplating process. After a nickel layer is formed, a tin layer may be subsequently formed on the skeletons of resin molded body through another electroplating process. Alternatively, when the resin-molded body is coated with a conductive layer, a tin layer may be electroplated first followed by the electroplating of a nickel layer. In some embodiments, chemical vapor deposition may be used to add chromium to a substantially nickel structure.

In some embodiments, after one or more metal layers are plated onto the skeletons of the resin-molded body, such as a nickel layer and/or a tin layer, a chromium layer may be added through an electroplating process. The chromium plating layer may be formed such that the chromium concentration of at least one surface of the porous structure is about 3% to about 50% by mass. After the chromium plating layer has been plated or after the nickel and/or tin plating layers are plated, the porous structure may be formed by removing the initial resin-molded body by heat treatment. For example, the porous structure may be heated in an inert atmosphere or a reducing atmosphere at a temperature in the range from about 900 °C to about 1300 °C. In some embodiments, the porous structure may comprise nickel and chromium but lack tin.

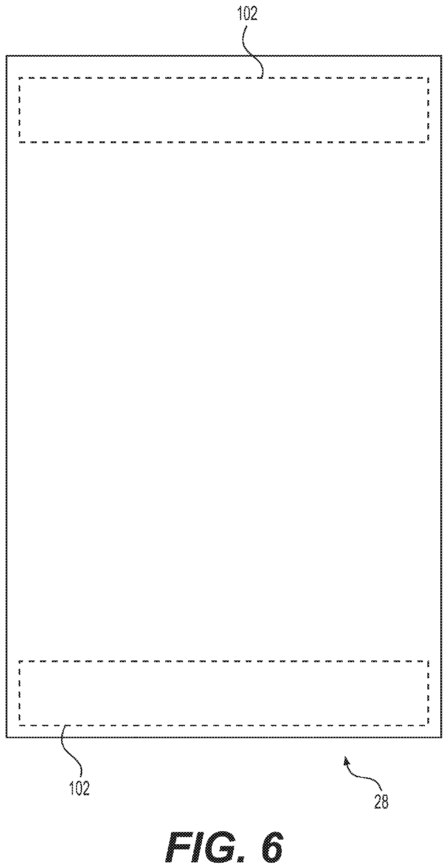

Fig. 6 is a back view of cathode flow field 28, according to an exemplary embodiment. The side visible in Fig. 6 is the side configured to face adjacent MEA 18B (see, e.g., FIG. 2). At least one side of cathode flow field 28 may be substantially smooth to prevent puncturing MEA 18B. Cathode flow field 28 may be rolled in, for example, a rolling mill, to reduce its thickness and/or smooth one or more of its sides. In some embodiments, regions 102 of cathode flow field 28 may press against subgasket 202 of MEA 18B. Regions 102 of cathode flow field 28 are smoother than other regions of cathode flow field 28. Having regions 102 of cathode flow field 28 be smoother may prevent puncturing subgasket 202. Regions 102 may be stamped smooth, for example, with a stamping die, such that regions 102 may be smooth. Regions 102 may undergo a rolling process in, for example, a rolling mill to increase their smoothness instead of or in addition to being stamped smooth. Regions 102 may be made smoother than other regions of cathode flow field 28 during an initial rolling process using a dedicated rolling die with special features on portions of the rollers making contact with regions 102. In some embodiments, regions 102 may have an arithmetic average roughness of less than about 2500 nm (about 100 µin). As a result, regions 102 may have a roughness that differs from the roughness of other portions of the rear surface of flow field 28. In some embodiments, the entire rear surface of flow field 28 may have a substantially equal roughness. For example, in some embodiments, regions 102 along with the rest of the entire rear side of flow field 28 may be a smooth surface. The entire rear surface of flow field 28 may have an arithmetic average roughness of less than about 2500 nm (about 100 µin).

The foregoing description has been presented for purposes of illustration. It is not exhaustive and is not limited to precise forms or embodiments disclosed. Modifications and adaptations of the embodiments will be apparent from consideration of the specification and practice of the disclosed embodiments.

Moreover, while illustrative embodiments have been described herein, the scope includes any and all embodiments having equivalent elements, modifications, omissions, combinations (e.g., of aspects across various embodiments), adaptations and/or alterations based on the present disclosure. The elements in the claims are to be interpreted broadly based on the language employed in the claims and not limited to examples described in the present specification or during the prosecution of the application; such examples are to be construed as nonexclusive. Further, the steps of the disclosed methods can be modified in any manner, including reordering steps and/or inserting or deleting steps.

The term "about" or "approximately" as used herein means within an acceptable error range for the particular value as determined by one of ordinary skill in the art, which will depend in part on how the value is measured or determined, e.g., the limitations of the measurements system. For example, "about" can mean within one or more than one standard deviation per the practice in the art. Alternatively, "about" can mean a range of up to 20%, such as up to 10%, up to 5%, and up to 1% of a given value.

As used herein, the indefinite articles "a" and "an" mean "one or more." Similarly, the use of a plural term does not necessarily denote a plurality unless it is unambiguous in the given context.

## Claims

1. An electrochemical cell stack (11), comprising:
a plurality of electrochemical cells (10) stacked along a longitudinal axis (5),
wherein one or more of the plurality of electrochemical cells (10) comprise:
a membrane electrode assembly (18) comprising a cathode catalyst layer (12), an anode catalyst layer (14), and a polymer membrane (16) interposed between the cathode catalyst layer (12) and the anode catalyst layer (14) and a subgasket (202) around the polymer membrane (16);
an anode plate (22) and a cathode plate (20) with the membrane electrode assembly (18) interposed therebetween; and
a cathode flow field (28) positioned between the cathode plate (20) and the cathode catalyst layer (12), wherein the cathode flow field (28) comprises a porous structure;
wherein the porous structure has one or more surface regions on a first side of the porous structure that are smoother than other regions of the cathode flow field (28), wherein the one or more surface regions face the membrane electrode assembly (18) and the one or more surface regions align with the subgasket (202) of the membrane electrode assembly (18).

2. The electrochemical cell stack (11) of claim 1, wherein the anode plate (22) defines a plurality of channels that form an anode flow field (30) facing the anode catalyst layer (14).

3. The electrochemical cell stack (11) of claim 1, wherein at least one of the anode plate (22) or the cathode plate (20) is formed of an uncoated 316 stainless steel alloy.

4. The electrochemical cell stack (11) of claim 1, wherein one or more portions of one or more surfaces on the anode plate (22) have an arithmetic average roughness from about 330 nm to about 710 nm (about 13 µin to about 28 µin) or wherein one or more portions of one or more surfaces on the cathode plate (20) have an arithmetic average roughness from about 330 nm to about 710 nm (about 13 µin to about 28 µin).

5. The electrochemical cell stack (11) of claim 1, wherein one or more portions of one or more surfaces on the anode plate (22) have an arithmetic average roughness from about 130 nm to about 890 nm (about 5 µin to about 35 µin) or wherein one or more portions of one or more surfaces on the cathode plate (20) have an arithmetic average roughness from about 130 nm to about 890 nm (about 5 µin to about 35 µin).

6. The electrochemical cell stack (11) of claim 1, wherein all surfaces of the anode plate (22) have an arithmetic average roughness from about 330 nm to about 710 nm (about 13 µin to about 28 µin).

7. The electrochemical cell stack (11) of claim 1, wherein all surfaces of the cathode plate (20) have an arithmetic average roughness from about 330 nm to about 710 nm (about 13 µin to about 28 µin).

8. The electrochemical cell stack (11) of claim 1, wherein a first side of the porous structure is smooth such that an arithmetic average roughness of the first side is less than about 2500 nm (about 100 µin), and the first side faces the membrane electrode assembly (18).

9. An electrochemical cell (10), comprising:
a membrane electrode assembly (18) comprising a cathode catalyst layer (12), an anode catalyst layer (14), and a polymer membrane (16) interposed between the cathode catalyst layer (12) and the anode catalyst layer (14) and a subgasket (202) around the polymer membrane (16);
an anode plate (22) and a cathode plate (20) with the membrane electrode assembly (18) interposed therebetween; and
a cathode flow field (28) positioned between the cathode plate (20) and the cathode catalyst layer (12), wherein the cathode flow field (28) comprises a porous structure;
wherein the porous structure has one or more surface regions on a first side of the porous structure that are smoother than other regions of the cathode flow field (28), wherein the one or more surface regions face the membrane electrode assembly (18) and the one or more surface regions align with a subgasket (202) of the membrane electrode assembly (18).

10. The electrochemical cell (10) of claim 9, where the anode plate (22) defines a plurality of channels that form an anode flow field (22) facing the anode catalyst layer (14).

11. The electrochemical cell (10) of claim 9, wherein at least one of the anode plate (22) or the cathode plate (20) is formed of an uncoated 316 stainless steel alloy.

12. The electrochemical cell (10) of claim 9, wherein one or more portions of one or more surfaces on the anode plate (20) have an arithmetic average roughness from about 330 nm to about 710 nm (about 13 µin to about 28 µin) or wherein one or more portions of one or more surfaces on the cathode plate (20) have an arithmetic average roughness from about 330 nm to about 710 nm (about 13 µin to about 28 µin).

13. The electrochemical cell (10) of claim 9, wherein one or more portions of one or more surfaces on the anode plate (22) have an arithmetic average roughness from about 130 nm to about 890 nm (about 5 µin to about 35 µin) wherein one or more portions of one or more surfaces on the cathode plate (20) have an arithmetic average roughness from about 130 nm to about 890 nm (about 5 µin to about 35 µin).

14. The electrochemical cell (10) of claim 9, wherein all surfaces of the anode plate (20) have an arithmetic average roughness from about 330 nm to about 710 nm (about 13 µin to about 28 µin).

15. The electrochemical cell (10) of claim 9, wherein all surfaces of the cathode plate (20) have an arithmetic average roughness from about 330 nm to about 710 nm (about 13 µin to about 28 µin).

## Patentansprüche

1. Elektrochemischer Zellenstapel (11), umfassend:
eine Vielzahl von elektrochemischen Zellen (10), die entlang einer Längsachse (5) gestapelt sind, wobei eine oder mehrere der Vielzahl von elektrochemischen Zellen (10) Folgendes umfassen:
eine Membran-Elektroden-Anordnung (18), die eine Kathodenkatalysatorschicht (12), eine Anodenkatalysatorschicht (14) und eine Polymermembran (16), die zwischen der Kathodenkatalysatorschicht (12) und der Anodenkatalysatorschicht (14) eingefügt ist, und eine Subgasket (202) um die Polymermembran (16) umfasst;
eine Anodenplatte (22) und eine Kathodenplatte (20), wobei die Membran-Elektroden-Anordnung (18) dazwischen eingefügt ist; und
ein Kathodenströmungsfeld (28), das zwischen der Kathodenplatte (20) und der Kathodenkatalysatorschicht (12) positioniert ist, wobei das Kathodenströmungsfeld (28) eine poröse Struktur umfasst;
wobei die poröse Struktur einen oder mehrere Oberflächenbereiche auf einer ersten Seite der porösen Struktur aufweist, die glatter als andere Bereiche des Kathodenströmungsfelds (28) sind, wobei der eine oder die mehreren Oberflächenbereiche der Membran-Elektroden-Anordnung (18) zugewandt sind und der eine oder die mehreren Oberflächenbereiche auf die Subgasket (202) der Membran-Elektroden-Anordnung (18) ausgerichtet sind.

2. Elektrochemischer Zellenstapel (11) nach Anspruch 1, wobei die Anodenplatte (22) eine Vielzahl von Kanälen definiert, die ein Anodenströmungsfeld (30) bilden, das der Anodenkatalysatorschicht (14) zugewandt ist.

3. Elektrochemischer Zellenstapel (11) nach Anspruch 1, wobei mindestens eine von der Anodenplatte (22) oder der Kathodenplatte (20) aus einer unbeschichteten Edelstahllegierung 316 besteht.

4. Elektrochemischer Zellenstapel (11) nach Anspruch 1, wobei ein oder mehrere Abschnitte einer oder mehrerer Oberflächen auf der Anodenplatte (22) eine arithmetische mittlere Rauheit von etwa 330 nm bis etwa 710 nm (etwa 13 µin bis etwa 28 µin) aufweisen oder wobei ein oder mehrere Abschnitte einer oder mehrerer Oberflächen auf der Kathodenplatte (20) eine arithmetische mittlere Rauheit von etwa 330 nm bis etwa 710 nm (etwa 13 µin bis etwa 28 µin) aufweisen.

5. Elektrochemischer Zellenstapel (11) nach Anspruch 1, wobei ein oder mehrere Abschnitte einer oder mehrerer Oberflächen auf der Anodenplatte (22) eine arithmetische mittlere Rauheit von etwa 130 nm bis etwa 890 nm (etwa 5 µin bis etwa 35 µin) aufweisen oder wobei ein oder mehrere Abschnitte einer oder mehrerer Oberflächen auf der Kathodenplatte (20) eine arithmetische mittlere Rauheit von etwa 130 nm bis etwa 890 nm (etwa 5 µin bis etwa 35 µin) aufweisen.

6. Elektrochemischer Zellenstapel (11) nach Anspruch 1, wobei alle Oberflächen der Anodenplatte (22) eine arithmetische mittlere Rauheit von etwa 330 nm bis etwa 710 nm (etwa 13 µin bis etwa 28 µin) aufweisen.

7. Elektrochemischer Zellenstapel (11) nach Anspruch 1, wobei alle Oberflächen der Kathodenplatte (20) eine arithmetische mittlere Rauheit von etwa 330 nm bis etwa 710 nm (etwa 13 µin bis etwa 28 µin) aufweisen.

8. Elektrochemischer Zellenstapel (11) nach Anspruch 1, wobei eine erste Seite der porösen Struktur glatt ist, so dass eine arithmetische mittlere Rauheit der ersten Seite weniger als etwa 2500 nm (etwa 100 µin) beträgt, und die erste Seite der Membran-Elektroden-Anordnung (18) zugewandt ist.

9. Elektrochemische Zelle (10), umfassend:
eine Membran-Elektroden-Anordnung (18), die eine Kathodenkatalysatorschicht (12), eine Anodenkatalysatorschicht (14) und eine Polymermembran (16), die zwischen der Kathodenkatalysatorschicht (12) und der Anodenkatalysatorschicht (14) eingefügt ist, und eine Subgasket (202) um die Polymermembran (16) umfasst;
eine Anodenplatte (22) und eine Kathodenplatte (20), wobei die Membran-Elektroden-Anordnung (18) dazwischen eingefügt ist; und
ein Kathodenströmungsfeld (28), das zwischen der Kathodenplatte (20) und der Kathodenkatalysatorschicht (12) positioniert ist, wobei das Kathodenströmungsfeld (28) eine poröse Struktur umfasst;
wobei die poröse Struktur einen oder mehrere Oberflächenbereiche auf einer ersten Seite der porösen Struktur aufweist, die glatter als andere Bereiche des Kathodenströmungsfelds (28) sind, wobei der eine oder die mehreren Oberflächenbereiche der Membran-Elektroden-Anordnung (18) zugewandt sind und der eine oder die mehreren Oberflächenbereiche auf eine Subgasket (202) der Membran-Elektroden-Anordnung (18) ausgerichtet sind.

10. Elektrochemische Zelle (10) nach Anspruch 9, wobei die Anodenplatte (22) eine Vielzahl von Kanälen definiert, die ein Anodenströmungsfeld (22) bilden, das der Anodenkatalysatorschicht (14) zugewandt ist.

11. Elektrochemische Zelle (10) nach Anspruch 9, wobei mindestens eine von der Anodenplatte (22) oder der Kathodenplatte (20) aus einer unbeschichteten Edelstahllegierung 316 besteht.

12. Elektrochemische Zelle (10) nach Anspruch 9, wobei ein oder mehrere Abschnitte einer oder mehrerer Oberflächen auf der Anodenplatte (20) eine arithmetische mittlere Rauheit von etwa 330 nm bis etwa 710 nm (etwa 13 µin bis etwa 28 µin) aufweisen oder wobei ein oder mehrere Abschnitte einer oder mehrerer Oberflächen auf der Kathodenplatte (20) eine arithmetische mittlere Rauheit von etwa 330 nm bis etwa 710 nm (etwa 13 µin bis etwa 28 µin) aufweisen.

13. Elektrochemische Zelle (10) nach Anspruch 9, wobei ein oder mehrere Abschnitte einer oder mehrerer Oberflächen auf der Anodenplatte (22) eine arithmetische mittlere Rauheit von etwa 130 nm bis etwa 890 nm (etwa 5 µin bis etwa 35 µin) aufweisen, wobei ein oder mehrere Abschnitte einer oder mehrerer Oberflächen auf der Kathodenplatte (20) eine arithmetische mittlere Rauheit von etwa 130 nm bis etwa 890 nm (etwa 5 µin bis etwa 35 µin) aufweisen.

14. Elektrochemische Zelle (10) nach Anspruch 9, wobei alle Oberflächen der Anodenplatte (20) eine arithmetische mittlere Rauheit von etwa 330 nm bis etwa 710 nm (etwa 13 µin bis etwa 28 µin) aufweisen.

15. Elektrochemische Zelle (10) nach Anspruch 9, wobei alle Oberflächen der Kathodenplatte (20) eine arithmetische mittlere Rauheit von etwa 330 nm bis etwa 710 nm (etwa 13 µin bis etwa 28 µin) aufweisen.

## Revendications

1. Empilement de cellules électrochimiques (11), comprenant :
une pluralité de cellules électrochimiques (10) empilées le long d'un axe longitudinal (5),
une ou plusieurs de la pluralité de cellules électrochimiques (10) comprenant :
un ensemble électrode-membrane (18) comprenant une couche de catalyseur de cathode (12), une couche de catalyseur d'anode (14) et une membrane polymère (16) intercalée entre la couche de catalyseur de cathode (12) et la couche de catalyseur d'anode (14) et un sousjoint (202) autour de la membrane polymère (16) ;
une plaque d'anode (22) et une plaque de cathode (20), l'ensemble électrode-membrane (18) étant intercalé entre elles ; et
un champ d'écoulement de cathode (28) positionné entre la plaque de cathode (20) et la couche de catalyseur de cathode (12), ledit champ d'écoulement de cathode (28) comprenant une structure poreuse ;
ladite structure poreuse comportant une ou plusieurs zones superficielles sur un premier côté de la structure poreuse qui sont plus lisses que les autres zones du champ d'écoulement de cathode (28), lesdites une ou plusieurs zones superficielles faisant face à l'ensemble électrode-membrane (18) et lesdites une ou plusieurs zones superficielles étant alignées avec le sousjoint (202) de l'ensemble électrode-membrane (18).

2. Empilement de cellules électrochimiques (11) selon la revendication 1, ladite plaque d'anode (22) définissant une pluralité de canaux qui forment un champ d'écoulement d'anode (30) faisant face à la couche de catalyseur d'anode (14).

3. Empilement de cellules électrochimiques (11) selon la revendication 1, au moins une parmi la plaque d'anode (22) ou la plaque de cathode (20) étant constituée d'un alliage d'acier inoxydable 316 non revêtu.

4. Empilement de cellules électrochimiques (11) selon la revendication 1, une ou plusieurs parties d'une ou plusieurs surfaces sur la plaque d'anode (22) comportant une rugosité moyenne arithmétique d'environ 330 nm à environ 710 nm (environ 13 µin à environ 28 µin) ou une ou plusieurs parties d'une ou plusieurs surfaces sur la plaque de cathode (20) comportant une rugosité moyenne arithmétique d'environ 330 nm à environ 710 nm (environ 13 µin à environ 28 µin).

5. Empilement de cellules électrochimiques (11) selon la revendication 1, une ou plusieurs parties d'une ou plusieurs surfaces sur la plaque d'anode (22) comportant une rugosité moyenne arithmétique d'environ 130 nm à environ 890 nm (environ 5 µin à environ 35 µin) ou une ou plusieurs parties d'une ou plusieurs surfaces sur la plaque de cathode (20) comportant une rugosité moyenne arithmétique d'environ 130 nm à environ 890 nm (environ 5 µin à environ 35 µin).

6. Empilement de cellules électrochimiques (11) selon la revendication 1, toutes les surfaces de la plaque d'anode (22) comportant une rugosité moyenne arithmétique d'environ 330 nm à environ 710 nm (environ 13 µin à environ 28 µin).

7. Empilement de cellules électrochimiques (11) selon la revendication 1, toutes les surfaces de la plaque de cathode (20) comportant une rugosité moyenne arithmétique d'environ 330 nm à environ 710 nm (environ 13 µin à environ 28 µin).

8. Empilement de cellules électrochimiques (11) selon la revendication 1, un premier côté de la structure poreuse étant lisse de sorte que la rugosité moyenne arithmétique du premier côté soit inférieure à environ 2500 nm (environ 100 µin), et le premier côté faisant face à l'ensemble électrode-membrane (18).

9. Cellule électrochimique (10), comprenant :
un ensemble électrode-membrane (18) comprenant une couche de catalyseur de cathode (12), une couche de catalyseur d'anode (14), et une membrane polymère (16) intercalée entre la couche de catalyseur de cathode (12) et la couche de catalyseur d'anode (14) et un sousjoint (202) autour de la membrane polymère (16) ;
une plaque d'anode (22) et une plaque de cathode (20), l'ensemble électrode-membrane (18) étant intercalé entre elles ; et
un champ d'écoulement de cathode (28) positionné entre la plaque de cathode (20) et la couche de catalyseur de cathode (12), ledit champ d'écoulement de cathode (28) comprenant une structure poreuse ;
ladite structure poreuse comportant une ou plusieurs zones superficielles sur un premier côté de la structure poreuse qui sont plus lisses que les autres zones du champ d'écoulement de cathode (28), lesdites une ou plusieurs zones superficielles faisant face à l'ensemble électrode-membrane (18) et lesdites une ou plusieurs zones superficielles étant alignées avec un sousjoint (202) de l'ensemble électrode-membrane (18).

10. Cellule électrochimique (10) selon la revendication 9, ladite plaque d'anode (22) définissant une pluralité de canaux qui forment un champ d'écoulement d'anode (22) faisant face à la couche de catalyseur d'anode (14).

11. Cellule électrochimique (10) selon la revendication 9, au moins une plaque parmi la plaque d'anode (22) ou la plaque de cathode (20) étant constituée d'un alliage d'acier inoxydable 316 non revêtu.

12. Cellule électrochimique (10) selon la revendication 9, une ou plusieurs parties d'une ou plusieurs surfaces sur la plaque d'anode (20) comportant une rugosité moyenne arithmétique d'environ 330 nm à environ 710 nm (environ 13 µin à environ 28 µin) ou une ou plusieurs parties d'une ou plusieurs surfaces sur la plaque de cathode (20) comportant une rugosité moyenne arithmétique d'environ 330 nm à environ 710 nm (environ 13 µin à environ 28 µin).

13. Cellule électrochimique (10) selon la revendication 9, une ou plusieurs parties d'une ou plusieurs surfaces sur la plaque d'anode (22) comportant une rugosité moyenne arithmétique d'environ 130 nm à environ 890 nm (environ 5 µin à environ 35 µin) ou une ou plusieurs parties d'une ou plusieurs surfaces sur la plaque de cathode (20) comportant une rugosité moyenne arithmétique d'environ 130 nm à environ 890 nm (environ 5 µin à environ 35 µin).

14. Cellule électrochimique (10) selon la revendication 9, toutes les surfaces de la plaque d'anode (20) comportant une rugosité moyenne arithmétique d'environ 330 nm à environ 710 nm (environ 13 µin à environ 28 µin).

15. Cellule électrochimique (10) selon la revendication 9, toutes les surfaces de la plaque de cathode (20) comportant une rugosité moyenne arithmétique d'environ 330 nm à environ 710 nm (environ 13 µin à environ 28 µin).
